# EUROPEAN PATENT SPECIFICATION

(11) **EP 4 056 922 B1**
(45) Date of publication and mention of the grant of the patent: **05.07.2023**
(21) Application number: 22159595.2
(22) Date of filing: 02.03.2022
(51) Int. Cl.: F24S 40/55, F24D 11/00, F24D 19/10, F24S 60/30, H02S 10/30, H02S 40/42, H02S 40/44

(54) **HIGH EFFICIENCY SOLAR PVT TRIGENERATION SYSTEM**
HOCHEFFIZIENTES SOLAR-PVT-TRIGENERIERUNGSSYSTEM
SYSTÈME DE TRIGÉNÉRATION PVT SOLAIRE À HAUTE EFFICACITÉ

(30) Priority: 08.03.2021 IT 202100005324
(43) Date of publication of application: 14.09.2022
(73) Proprietor: Università degli Studi di Catania, 95124 Catania (CT) (IT)
(72) Inventor: GAGLIANO, Antonio, 95123 Catania (CT) (IT); TINA, Giuseppe Marco, 95129 Catania (CT) (IT); ANELI, Stefano, 97019 Vittoria (RG) (IT)
(74) Representative: Mola, Edoardo

(56) References cited:
- EP-A1- 3 748 253
- CN-A- 109 114 804
- CN-U- 207 035 564

## Description

### Technical field

The present invention is set in the technical field of the Photo Voltaic and Thermal (PVT) panel systems, specifically the trigeneration PVT systems, more specifically the systems used for the production of Domestic Hot Water (DHW).

### Background

The technological progress in the field of the renewable energies has led to a growth in the use of solar energy technologies, as a replacement of the conventional fossil fuels, and to the development of photovoltaic and thermal (PVT) modules to supply electrical and thermal energy to different (that is civil and industrial) types of users, the use thereof has become more and more common for the production of electricity and/or thermal energy (co-generation) for the production of domestic hot water (DHW) and the heating/cooling of environments.

In the trigeneration PVT plants, to the production of electrical energy and heat, the production of air/cooled water is added, obtained through the implementation of refrigeration machines (that is heat pumps, HP). With the addition of further components, an increase in the overall dimensions and costs for the implementation of trigeneration plants, based upon the use of PVT modules, is inevitable.

The combination of different components generating different types of energy and the greater complexity of the resulting systems deriving therefrom, makes also necessary the development of new coordination strategies for the optimization of the performances of these systems with the purpose of meeting the suitable load requirements inside a structure.

Another one of the main problems in the use of photovoltaic plants is the overheating of the photovoltaic cells, in particular when the incident solar radiation is more intense and in the warmer climates. This leads to a progressive reduction in the effectiveness of the photovoltaic cells, and consequently in the yield, as the temperature rises, a reduction in the useful life of the photovoltaic modules when they operate at high temperatures and the risk of stagnation in absence of energy request of users in the thermal solar systems.

The solutions currently used for cooling the photovoltaic modules are the circulation of water inside a closed loop (conventional PVT system). The main limit of this solution is due to the fact that in order to produce thermal energy with sufficient enthalpic levels, the cooling fluid reaches high temperature and consequently there will be an increase in the temperature of the photovoltaic cells and the reduction in the electric efficiency.

Other used solutions are the use of flowing water which is sprayed on the photovoltaic modules, the introduction of cooling fins to increase the thermal exchange surfaces of the photovoltaic modules, the use of phase change materials (PCM) and the use of heat dissipation systems (for example air heaters) to contrast the risk of stagnation in the thermal solar panels. Such solutions, however, are not optimum.

The use of flowing water for cooling the photovoltaic cells involves both extra costs due to the implementation of the cooling circuit as well as the water consumption deriving therefrom, due to the modest effectiveness of the cooling system with consequent waste of water resource. Moreover, the water sprayed onto the PV module can cause limestone deposits which reduce permanently the glass transparency, unless additional expensive systems for softening water are introduced.

The use of cooling fins and/or of PCM increases considerably the complexity of production chain, the cost and installation of the photovoltaic plants. Moreover, the cooling fins in the year months characterized by higher temperatures and calm of wind, have very modest efficiencies, then by limiting the cooling of cells thereof when the most critical conditions occur for the photovoltaic modules.

The use of PCM, currently proposed only in the field of the scientific research, in case of critical environmental conditions can reveal counterproductive since the capability of storing thermal energy has exhausted, due to the complete liquefaction, the additional layer represents an additional thermal resistance to the heat dissipation from the PV module, then by wholly nullifying the effects thereof.

A more recent solution to the problem of cooling the photovoltaic cells was detected in the use of radiant cooling (RC) systems. In the RC systems, the water tubes are connected to a radiative panel, in which the water is cooled down.

However, the use of RC panels involves additional problems of controlling the temperature of the radiative panel itself to avoid air condensation phenomena (that is the surface temperature of the RC panel has to remain above the dew point of the air), apart from increasing the need for additional spaces for its installation and additional extra costs.

At last, to the applicant's knowledge, there are no trigeneration PVT plants meeting the need for using additional devices (for example HP), bulky and with not negligible cost, and implementing panels with radiative cooling.

Consequently, an aspect of the present disclosure is to provide a PVT system and a control method facing the above-mentioned problems and disadvantages of the conventional PVT systems in trigeneration configuration and which avoids the disadvantages of unwished condensation, space requirements, connectivity and installation costs existing in the conventional systems.

CN 207 035 564 U discloses a system for the simultaneous production of electrical, thermal and cooling energy comprising: a PVT panel with radiative cooling, for the production of electrical, thermal energy and cooling energy; a cold storage tank and a first heat exchanger, to release heat from the water heated in said PVT panel; connected to each other in a first hydraulic circuit; the system further comprising: first means for controlling the flow of water in said first hydraulic circuit; and a hot storage tank, adapted to contain water and comprising an inlet and an outlet, said first heat exchanger being inside said hot storage tank.

### Summary

The object of the present invention is to improve the energy performances of the conventional PVT plants for the production of electrical energy and thermal energy by means of a new trigeneration configuration apt to produce even refrigerated water.

Said object is reached with the system and the process described in the present disclosure, the features thereof are specified respectively in the enclosed independent claims 1 and 15 and in the respective depending claims.

A first advantage of the present invention is the consequent limitation, to the minimum, of the need for adding additional components and plant management complexity, and then the decrease in the physical overall dimensions, not requiring any structural modification of the PVT plants.

An additional advantage is the limitation of the costs associated to the implementation of a trigeneration PVT system according to the present invention.

### Brief description of drawings

These and other advantages and features of the present invention will result evident to the persons skilled in the art from the following detailed description of some embodiments, shown by way of example and not for limitative purposes by making reference to the enclosed figures, wherein:
- Figure 1 shows a PVT system not according to the present invention and
   comprising only one hydraulic circuit, only one storage tank and only one heat exchanger;
- Figure 2 shows a PVT system according to the present invention analogous to figure 1 and comprising a second hydraulic circuit, a second storage tank and a second heat exchanger;
- Figure 3 shows a PVT system according to the present invention analogous to figure 1 and comprising additional components.

### Detailed description of some embodiments

Some exemplifying embodiments of the present invention are described hereinafter.

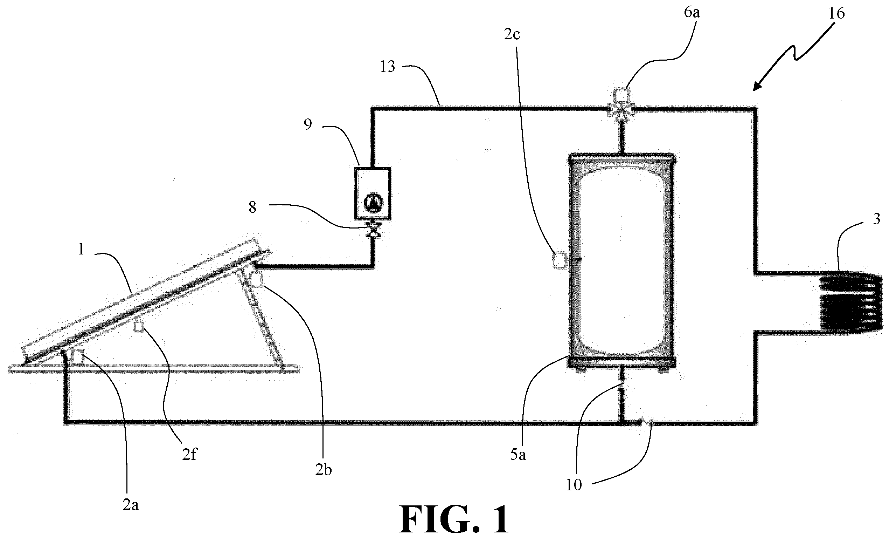

By making reference to figures 1 to 3 it can be seen that the system 16 PVT for the trigeneration production of electrical, thermal and cooling energy comprises a PVT panel 1, preferably of non-glazed, traditional type with radiative cooling connected to a first hydraulic circuit 13, inside thereof a heat transfer fluid, preferably water, is made to flow. The PVT panel 1 is used for the production of electrical energy and, as it is a panel with radiative cooling, it is further capable of releasing thermal energy to the atmosphere by long wave radiation. In particular, an additional function thereof is to heat and cool the water coming from the hydraulic circuit 13 and flowing inside thereof. According to a preferred embodiment, the PVT panel 1 is of non-glazed type.

The water heating is mainly made during the daytime hours and the heated water is made to flow inside the circuit 13 to feed a first heat exchanger 3 to release the heat of the water heated in said PVT panel 1 to an external user. In an embodiment schematically represented in figure 1, said heat exchanger is adapted to heat the air of one or more rooms of a building, for example by means of a radiator system. The water cooling is made during all daytime hours. The cooled water is stored inside a first cold storage tank 5a and it can be made to flow inside the hydraulic circuit 13 to cool the PVT panel 1 when determined conditions, described hereinafter, are verified.

The water flow in the hydraulic circuit 13 is controlled by a group of first means 6a, 8, 9, 10, configured so that the PVT panel 1 can be alternatively connected hydraulically to the cold storage tank 5a or to said first heat exchanger 3, as a function of water temperature values measured at predetermined points of the system 16 by first means 2a, 2b, 2c, 2f for measuring the temperature.

According to one or more embodiments of the present invention, said first means for controlling the flow of water in the hydraulic circuit 13 comprises a first motorized three-way diverter valve 6a, configured to alternatively connect the output of said PVT panel 1 to the cold storage tank 5a or to the heat exchanger 3. A flow meter 8, configured for measuring the flow of running water in the hydraulic circuit 13, a pair of check valves 10, configured for avoiding reverse flows in the cold storage tank 5a and in the first heat exchanger 3, and a traditional pumping unit 9, configured for generating the water flow inside the hydraulic circuit 13, are further comprised. The pumping unit 9, in turn, can include, a circulation pump, an expansion vessel, one or more manometers, safety elements and any additional component allowing the correct operation. According to another embodiment, not shown in figure, the pair of check valves 10 is replaced by an additional motorized three-way diverter valve 6c, configured to perform the same function of the pair of valves 10.

The means for measuring temperature values, according to one or more embodiments of the present invention, comprises a first and a second temperature sensor 2a, 2b, configured for measuring the temperature of the water entering and leaving the PVT 1 panel, respectively, a third temperature sensor 2c, configured for measuring the temperature of the water in the cold storage tank 5a, and a fourth temperature sensor 2f, configured for measuring the temperature of the cells in the rear portion of the photovoltaic module of the PVT 1 panel. According to an alternative embodiment, the sensor 2f consists of a module, not shown in figure, configured to calculate indirectly the temperature of the cells starting from a measurement of the temperature of the rear portion of the photovoltaic module of the PVT 1 panel.

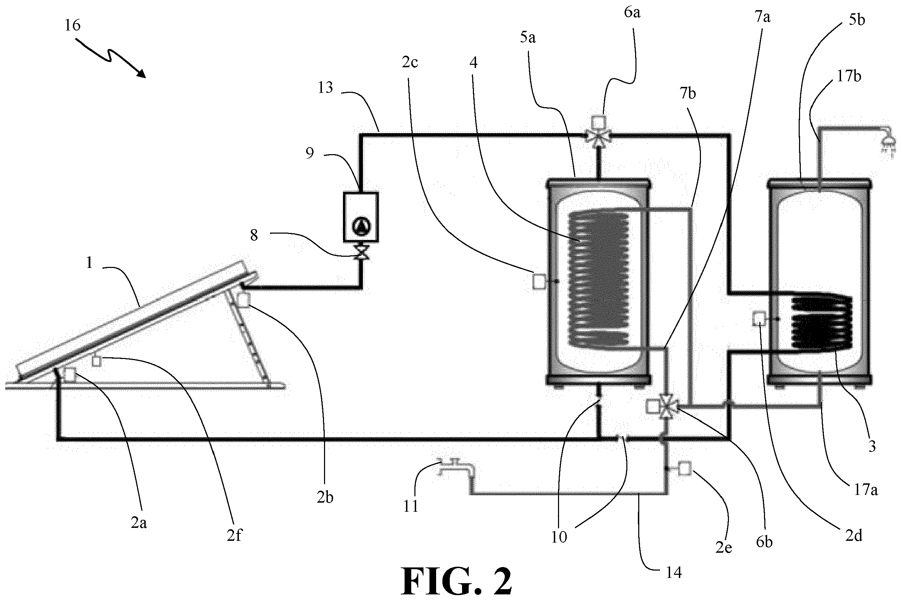

According to an embodiment of the present invention, shown in figure 2 the system 16 comprises a second hydraulic circuit 14, separated from the first circuit 13, inside thereof a fluid is made to flow, preferably water. The second circuit 14 can be connected to water mains, for example the domestic water mains, through a water intake 11, for example a tap, in order to make the mains water to flow inside the circuit 14. A hot storage tank 5b and a second heat exchanger 4, connected hydraulically to the second circuit 14, are further comprised.

The hot storage tank 5b is adapted to contain water and is configured so that the first heat exchanger 3 is inserted inside thereof to release the heat of the water heated in the PVT 1 panel to the water contained in said tank 5b. The hydraulic circuit 14 is connected hydraulically to the hot storage tank 5b by means of an inlet 17a, therethrough the mains water can be conveyed in the tank 5b. The water contained in the tank 5b can be heated through the heat exchanger 3 and dispensed outside the tank 5b through an outlet 17b, therethrough the heated water can be supplied to an external use as DHW.

The second heat exchanger 4 is preferably inserted inside the cold storage tank 5a and it is configured to allow an additional cooling of the water contained in the cold storage tank 5a through enhancement of the cooling potential of the mains water. As a function of determined conditions, described hereinafter, the mains water, flowing in the circuit 14, can be made to flow through an inlet 7a inside the heat exchanger 4, the inlet 7a being fed by the connection 11 to the water mains. The water in the heat exchanger 4 absorbs the heat of the water contained in the cold storage tank 5a, by causing the cooling thereof.

The water cooling in the tank 5a translates into a release of heat to the running water in the heat exchanger 4, flowing through an outlet 7b of said heat exchanger 4, to reenter the hydraulic circuit 14. As a function of determined conditions, described hereinafter, the outlet 7b can further be connected to feed said hot storage tank 5b, so that the water coming from the second heat exchanger 4 enters the tank 5b at a higher temperature, in a so-called preheating process.

Second means 6b for controlling the flow of water in said second hydraulic circuit 14 and configured so that the water mains can feed said second heat exchanger 4 and/or said hot storage tank 5b are further comprised, as a function of the first temperature values and even as a function of second temperature values of the water, measured by second means 2d, 2e of measuring the temperature at predetermined points of the system 16.

According to an embodiment of the present invention, the second means for controlling the flow of water in the circuit 14 comprises an additional motorized three-way diverter valve 6b, configured to connect or disconnect the second heat tank 4 from the remaining part of the circuit 14. The second means for measuring the temperature comprises a fifth temperature sensor 2d, configured for measuring the temperature of the water in said hot storage tank 5b and a sixth temperature sensor 2e, configured for measuring the temperature of the running water in the second hydraulic circuit 14.

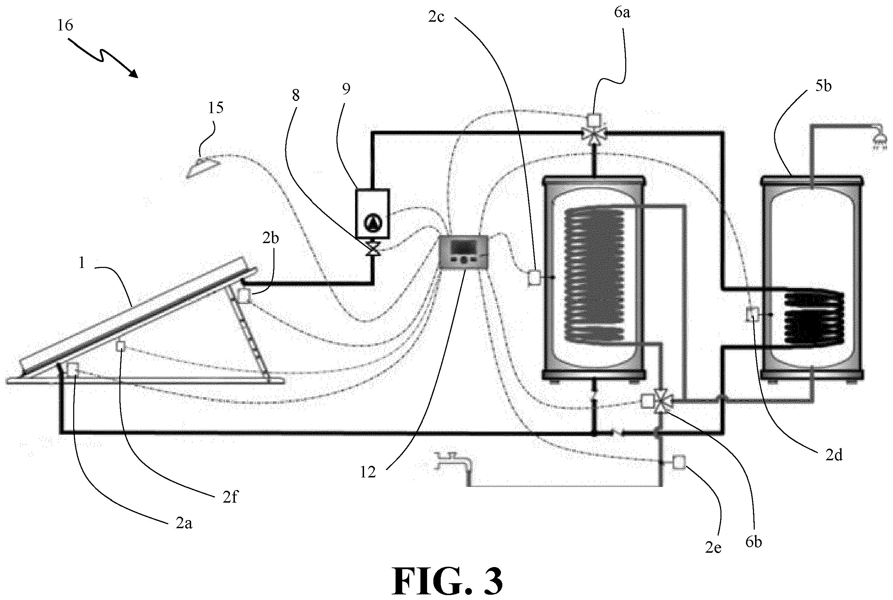

According to an additional embodiment of the present invention, shown in figure 3, the system 16 can include means 15 for measuring the intensity of the solar radiation, for example one or more solarimeters, and a control unit 12.

The control unit 12 can be functionally connected to the first and second means for controlling the flow of water 6a, 6b, 6c, 8, 9, 10, to the first and second means for measuring temperature values 2a-2e and to the means for measuring the intensity of the solar radiation 15, the control unit 12 being configured to operate said first and second control means as a function of said first and second means for measuring temperature values 2a - 2e for managing the flow of water in said first and second hydraulic circuits 13, 14 when determined conditions, described hereinafter, occur.

The trigeneration production of electrical, thermal and cooling energy by the above system 16 provides that the electric energy is produced through the PVT panel 1 according to the traditional modes known in the state of art. The production of thermal and cooling energy instead is made as a function of the measurement of said first and/or second temperature values at predetermined points of the system 16 and the consequent control of the water flow in said first and/or second hydraulic circuit 13, 14, the water flow being generated by said pumping unit 9. In particular, the control of the first hydraulic circuit 13 is made so that the PVT panel 1 is alternatively connected hydraulically to the cold storage tank 5a or to the first heat exchanger by means of opening or closing the motorized three-way valve 6a as a function of the first and/or second measured temperature values. The check of the second hydraulic circuit 14 instead is made so that the second heat exchanger 4 is alternatively connected hydraulically to the hot storage tank 5b by means of opening or closing the motorized three-way valve 6b as a function of the first and/or second measured temperature values.

According to one or more embodiments of the present invention, a night cooling operating mode is provided, preferably active during the night, which provides to measure said first temperature values, in particular values Tₒᵤₜ of the temperature of the water leaving the PVT 1 panel and T_{Sfr} of the temperature of the water in the cold storage tank 5a. A first difference D1 between Tₒᵤₜ and T_{Sfr} then is calculated and compared with a first predetermined threshold value ΔT_{fr}, designating the difference of temperature useful for cooling the PVT 1 panel. Should a condition be verified, for which D1 is higher than ΔT_{fr}, the flow of water in the first hydraulic circuit is controlled, so as to hydraulically connect the PVT panel 1 to the cold storage tank 5a and to generate a flow of water between the PVT panel 1 and the tank 5a. Differently, the fluid circulation is not started.

The water cooled by radiation by the PVT 1 panel is then conveyed in the tank 5a, resulting in a cooling of the water contained therein and a storage of cold water, which could be used during the normal operation of the system 16 during the day.

A heating or DHW-production operating mode is also provided, preferably active during the day, which provides to measure said first and second temperature values and to control the water flow in the first hydraulic circuit 13. The temperatures determined directly or indirectly comprise, apart from Tₒᵤₜ and Tsfr, the values T_{cell} of the temperature of the cells of the PVT 1 panel and Ts, ₕₒₜ of the temperature of the water in the hot storage tank 5b. In particular, the temperature values are compared with predetermined threshold values, as enlisted hereinafter:
- T_{cell} is compared with a second threshold value, Tₘₐₓ, designating the temperature threshold beyond which the cells of the PVT 1 panel result to be overheated, by causing a decrease in the electric performance;
- a second difference D2 between Tₒᵤₜ and T_{S, hot} is calculated and compared with a third threshold value, ΔT_{hot.}, designating the difference of temperature useful to heat the water contained in the hot tank 5b; and
- T_{S, hot} is compared with a fourth threshold value, T_{Setpoint}, designating minimum optimum temperature of the hot water contained in the hot storage tank.

The mode provides to check the water flow in the first hydraulic circuit 13 so as to hydraulically connect said PVT panel 1 to the first heat exchanger 3 and to generate a flow of water from the PVT 1 panel to the heat exchanger 3 should the conditions enlisted in the following scenarios a, b or c occur:
Scenario a)
   - T_{cell} lower than Tₘₐₓ; and
   - D2 higher than ΔT_{hot.}.
Scenario b)
   - T_{cell} higher than Tₘₐₓ;
   - T_{S}, ₕₒₜ lower than T_{Setpoint}; and
   - D2 higher than ΔT_{hot.}
Scenario c)
   - T_{cell} higher than Tₘₐₓ;
   - T_{S}, ₕₒₜ higher than T_{Setpoint};
   - Tₒᵤₜ lower than T_{Sfr}; and
   - D2 higher than ΔTₕₒₜ.

The water heated by the PVT 1 panel then is made to flow in the heat exchanger 3 to release heat to the water contained in the hot storage tank 5b and intended to be dispensed as DHW to a final user through the outlet 17b of the hot storage tank 5b.

The heating or DHW-production operating mode further provides a transitory condition for cooling the PVT 1 panel in case it overheats, the temperature of the running water in the circuit 13 is not sufficiently low to keep a constant electrical efficiency and the temperature of the water in the hot storage tank 5b is sufficiently high to meet the needs of the end user. With the purpose of avoiding an excessive drop in the electrical efficiency, the system 16 activates to perform a cooling of the PVT 1 panel.

In particular, this configuration provides that the flow of water in the first hydraulic circuit 13 is controlled so as to hydraulically connect the PVT panel 1 to the cold storage tank 5a and preferably to disconnect it temporarily from the heat exchanger 3. A flow of water between the tank 5a and the PVT panel 1 is then generated when the following conditions occur:
- T_{cell} higher than Tₘₐₓ;
- T_{S, hot} higher than T_{Setpoint}; and
- Tₒᵤₜ is higher than T_{Sfr}.

Consequently, the cooling potential of the water contained in the cold storage tank 5a is exploited, which, by flowing in the PVT 1 panel, lowers the temperature T_{cell} thereof and increases the electrical efficiency thereof. Once reached acceptable temperature values, the system 16 goes back to operate in the heating operating mode according to scenarios a, b or c.

An additional operating mode of the system 16 can operate parallelly and/or independently from the other operating modes enlisted above for the cooling of water contained in the cold storage tank 5a, the feeding of the hot storage tank 5b and the pre-heating of the water inside thereof.

In particular, this mode provides to measure an additional temperature value, Tₘₐᵢₙₛ of the temperature of the running water in said second hydraulic circuit 14 and the comparison of Tₘₐᵢₙₛ with T_{Sfr}. The flow of water in the circuit 14 is consequently controlled so that said second heat exchanger 4 is hydraulically connected to the hot storage tank 5b when the condition occurs for which Tₘₐᵢₙₛ is lower than T_{Sfr}. In this case, the motorized three-way diverter valve 6b opens so that the connection to the water mains 11 is hydraulically connected to the inlet 7a of the heat exchanger 4 and the cooling potential of the mains water is exploited to cool the water inside the cold storage tank 5a. Consequently, the pre-heated mains water flows through the outlet 7b of the heat exchanger 4 to feed the hot storage tank 5b.

In case the condition occurs for which Tₘₐᵢₙₛ is higher than T_{Sfr}, the flow of water in the second hydraulic circuit 14 will be controlled so that the second heat exchanger 4 is hydraulically disconnected from the hydraulic circuit 14. In this, the valve 6b will be opened so as to allow a direct connection of the inlet 17a of the hot storage tank 5b with the water mains.

In the light of the last described operating mode, an advantageous double effect is produced on the performances of the system 16, the first one due to the pre-heating of the mains water, with the consequent gain in terms of thermal energy and the second one due to the cooling of the cold tank 5a even during the day. In particular, it results advantageous that the cooling of the cold storage tank 5a can exploit the cooling potential of the mains water even autonomously and independently from the radiative cooling of the PVT panel.

The control unit 12 implements an algorithm for managing the plant constituting the system 16, said algorithm having being developed by the applicant to allow to manage the system in trigeneration mode based upon input data measured by the sensors therewith the plant is equipped, in particular the first and second means for measuring the temperature 2a - 2f and the solar radiation sensor 15. The latter is also configured for measuring the intensity of the solar radiation G incident on the PVT 1 panel and, if a predetermined threshold intensity value G_{threshold} is not exceeded, the algorithm manages the operation of the system 16 by performing the night cooling mode. Otherwise, if G results to be higher than G_{threshold}, the system will operate according to the heating mode during the day.

Some embodiments of the present invention, with respect to a "conventional" photovoltaic thermal system, provide the use of a single PVT module with radiative cooling, the addition of a storage tank of the refrigerated water, a diverter valve and a controller. This results to be advantageous since the proposed invention constitutes a trigeneration system capable of producing from renewable source electrical, thermal and cooling energy.

According to some embodiments, the refrigerated water is produced both by means of RC and by means of enhancement of the mains water. The water cooling is performed in dual mode by the PVT-RC module, that is through the radiative exchange between the surface of the PVT module and sky, by means of the enhancement of the cooling potential of the mains water, the temperature thereof normally is below 15°C. The mains water then is used, apart for the production of domestic hot water (DHW), to cool down the water stored in a storage tank of refrigerated water at the temperature of about 20°C, with the purpose of being used for cooling the PVT modules.

The invention can even be used in installations where there are conventional not glazed solar thermal systems. In this case the produced cold water, rather than being used for cooling the photovoltaic cells, can be used both as cooling system in case of stagnation and for environmental air conditioning through radiant panel systems.

The possible installation of a second storage tank, for the refrigerated water, allows the use thereof in different periods from when it is produced, thus by increasing the system versatility and by increasing the possible applications thereof.

This configuration results to be advantageous since it allows the preheating of DHW, to be sent to users, which is obtained by exploiting the enthalpic jump within the cold tank before performing the subsequent heating thereof inside the hot tank. The circuit for feeding the DHW to be sent to the users then provides a double enthalpic jump, the first one inside the storage tank for the refrigerated water and the second one in the storage tank for the hot water.

The proposed invention, with respect to the state of art, results to be further advantageous since it does not require water consumption. In fact, the same is made to recirculate within the cooling circuit implemented between the storage tank of refrigerated water and the PVT modules. Moreover, it does not require any structural modification of the PVT modules, such as installation of refrigeration apparatuses (for example Heat Pumps), thus limiting to the minimum the introduction of water distribution networks, apart from the already existing ones, and of complex systems for adjusting and controlling the same.

As a whole, an increase in the both thermal and electrical efficiency is obtained. The advantages which are obtained from the proposed system can be evaluated by considering that the power of a photovoltaic module decreases by 0.4÷0.5% for 1°C of temperature difference with respect to the standard conditions (STC), equal to 25°C. From the performed analyses, the refrigerated water produced by the system reaches temperatures of about 20°C, since the photovoltaic cells can reach temperatures higher than 50° C, it is possible to evaluate a cooling of the cells of about 10°C with a consequent average increase in the electrical efficiency in the order of 5%.

This plant solution causes an increase in the thermal efficiency of the PVT plant of about 5%, in addition to the increase in the electrical efficiency, apart from contributing to the increase in the useful life of the photovoltaic cells.

Possible variants or additions can be introduced by the persons skilled in the art to the herein described and illustrated embodiments, while remaining within the following claims. In particular, additional embodiments can include the technical features of one of the following claims with the addition of one or more technical features described in the text or illustrated in the drawings, taken individually or in any mutual combination.

## Claims

1. A system (16) for the simultaneous production of electrical, thermal and cooling energy comprising:
- a PVT panel (1) with radiative cooling, preferably of non-glazed type, for the production of electrical and/or thermal energy and/or cooling energy;
- a cold storage tank (5a), adapted to contain cooled water in said PVT panel (1); and
- a first heat exchanger (3), to release heat from the water heated in said PVT panel (1);
connected to each other in a first hydraulic circuit (13);
the system further comprising:
- first means (2a, 2b, 2c, 2f) for measuring first temperature values at predetermined points of the system (16);
- first means (6a, 8, 9, 10) for controlling the flow of water in said first hydraulic circuit (13), configured so that said PVT panel (1) can be alternatively connected hydraulically to said cold storage tank (5a) or to said first heat exchanger (3), as a function of said first measured temperature values, and
- a hot storage tank (5b), adapted to contain water and comprising an inlet (17a) and an outlet (17b), said first heat exchanger (3) being inside said hot storage tank (5b).

2. The system according to claim 1, further comprising a second heat exchanger (4) within said cold storage tank (5a), said second heat exchanger (4) and said hot storage tank (5b) being connected to each other in a second hydraulic circuit (14).

3. The system according to claim 2, wherein said second hydraulic circuit (14) is connected to water mains through a water intake (11) and said second heat exchanger (4) has an inlet (7a) fed by said connection (11) to the water mains and an outlet (7b) connected to feed said hot storage tank (5b).

4. The system according to claim 3, further comprising:
- second means (2d, 2e) for measuring second temperature values at predetermined points of the system (16), and
- second means (6b) for controlling the flow of water in said second hydraulic circuit (14) configured so that the water mains can feed said second heat exchanger (4) and/or said hot storage tank (5b), as a function of said second measured temperature values.

5. The system according to one of claims 1 to 4, wherein said first means (2a, 2b, 2c, 2f) for measuring temperature values comprises:
- a first temperature sensor (2a), configured for measuring the temperature of the water entering said PVT panel (1);
- a second temperature sensor (2b), configured for measuring the temperature of the running water leaving said PVT panel (1);
- a third temperature sensor (2c), configured for measuring the temperature of the water in said cold storage tank (5a);
- a fourth temperature sensor (2f), configured for measuring the temperature of the cells in the rear portion of the photovoltaic module of said PVT panel (1).

6. The system according to one of claims 1 to 5, wherein said first means (6a, 8, 9, 10) for controlling the flow of water in said first hydraulic circuit (13) comprises:
- a first motorized three-way diverter valve (6a), configured to alternatively connect the output of said PVT panel (1) to said cold storage tank (5a) or to said first heat exchanger (3);
- a flow meter (8), configured for measuring the flow of running water in said first hydraulic circuit (13);
- a pumping unit (9), configured for generating the flow of water inside said first hydraulic circuit (13);
- a pair of check valves (10), configured for avoiding reverse flows in the cold storage tank (5a) or in said first heat exchanger (3).

7. The system according to one of claims 4 to 6, wherein said second means (2d, 2e) for measuring temperature values comprises:
- a fifth temperature sensor (2d), configured for measuring the temperature of the water in said hot storage tank (5b);
- a sixth temperature sensor (2e), configured for measuring the temperature of the running water in said second hydraulic circuit (14);

8. The system according to any one of claims 4 to 7, comprising means (15) for measuring the intensity of the solar radiation and a control unit (12) functionally connected to said first and second means for controlling the flow of water, to said first and second means for measuring temperature values (2a - 2e) and to said means for measuring the intensity of the solar radiation (15), said control unit (12) being configured to operate said first and second control means as a function of said first and second means for measuring temperature values (2a - 2e) for managing the flow of water in said first and second hydraulic circuits (13, 14).

9. A method of producing electrical, thermal and cooling energy, by means of a system (16) according to any one of claims 2 to 8, comprising the steps of:
- measuring first temperature values in predetermined points of said system (16), and
- controlling the flow of water in said first hydraulic circuit (13), so that said PVT panel (1) is alternatively connected hydraulically to said cold storage tank (5a) or to said first heat exchanger (3), as a function of said first measured temperature values;
- measuring second temperature values in predetermined points of said system (16),
- controlling the flow of water in said first hydraulic circuit (13), so that said PVT panel (1) is alternatively connected hydraulically to said cold storage tank (5a) or to said first heat exchanger (3), as a function of said first and second measured temperature values; and
- controlling the flow of water in said second hydraulic circuit (14), so that said second heat exchanger (4) is alternatively connected hydraulically to said hot storage tank (5b) as a function of said first and second measured temperature values.

10. The method of producing electrical, thermal and cooling energy according to claim 9, wherein:
said first temperature values comprise a value (Tₒᵤₜ) of the temperature of the water leaving said PVT panel (1) and a value (T_{Sfr}) of the temperature of the water in said cold storage tank (5a);
the method further comprising:
- comparing a first difference (D1) between said value (Tₒᵤₜ) of the temperature of the water leaving said PVT panel (1) and said value (T_{Sfr}) of the temperature of the water in said cold storage tank (5a) with a first threshold value (ΔT_{fr.});
- controlling the flow of water in said first hydraulic circuit (13) so as to hydraulically connect said PVT panel (1) to said cold storage tank (5a) and to generate a flow of water between said PVT panel (1) and said cold storage tank (5a), when said first difference (D1) is higher than said first threshold value (ΔT_{fr.}).

11. The method of producing electrical, thermal and cooling energy according to claim 9 or 10, wherein:
said first temperature values comprise a value (Tₒᵤₜ) of the temperature of the water leaving said PVT panel (1) and a value (T_{cell}) of the temperature of the cells of said PVT panel (1);
said second temperature values comprise a value (T_{S, hot}) of the temperature of the water in said hot storage tank (5b);
the method further comprising:
- comparing said value (T_{cell}) of the temperature of the cells of said PVT panel (1) with a second threshold value (Tₘₐₓ);
- comparing a second difference (D2) between said value (Tₒᵤₜ) of the temperature of the water leaving said PVT panel (1) and a value (T_{S, hot}) of the temperature of the water in said hot storage tank (5b) with a third threshold value (ΔTₕₒₜ); and
- controlling the flow of water in said first hydraulic circuit (13) so as to hydraulically connect said PVT panel (1) to said first heat exchanger (3) and to generate a flow of water from said PVT panel (1) to said first heat exchanger (3), when:
- said value (T_{cell}) of the temperature of the cells of said PVT panel (1) is lower than said second threshold value (Tₘₐₓ); and
- said second difference (D2) is higher than said third threshold value (ΔT_{hot.}).

12. The method of producing electrical, thermal and cooling energy according to claim 11, further comprising the steps of:
- comparing said value (T_{cell}) of the temperature of the cells of said PVT panel (1) with said second threshold value (Tₘₐₓ);
- comparing said value (T_{S, hot}) of the temperature of the water in said hot storage tank (5b) with a fourth threshold value (T_{Setpoint});
- comparing said second difference (D2) with said third threshold value (ΔT_{hot.}); and
- controlling the flow of water in said first hydraulic circuit (13) so as to hydraulically connect said PVT panel (1) to said first heat exchanger (3) and to generate a flow of water from said PVT panel (1) to said first heat exchanger (3), when:
- said value (T_{cell}) of the temperature of the cells of said PVT panel (1) is higher than said second threshold value (Tₘₐₓ)
- said value (T_{S, hot}) of the temperature of the water in said hot storage tank (5b) is lower than said fourth threshold value (T_{Setpoint}); and
- said second difference (D2) is higher than said third threshold value (ΔT_{hot.}).

13. The method of producing electrical, thermal and cooling energy according to one of claims 11 or 12, wherein:
said first temperature values comprise a value (T_{Sfr}) of the temperature of the water in said cold storage tank (5a); the method further comprising:
- comparing said value (T_{cell}) of the temperature of the cells of said PVT panel (1) with said second threshold value (Tₘₐₓ);
- comparing said value (T_{S, hot}) of the temperature of the water in said hot storage tank (5b) with said fourth threshold value (T_{Setpoint});
- comparing said value (Tₒᵤₜ) of the temperature of the water leaving said PVT panel (1) with said value (T_{Sfr}) of the temperature of the water in said cold storage tank (5a);
- comparing said second difference (D2) with said third threshold value (ΔT_{hot.}); and
- controlling the flow of water in said first hydraulic circuit (13) so as to hydraulically connect said PVT panel (1) to said first heat exchanger (3) and to generate a flow of water from said PVT panel (1) to said first heat exchanger (3), when:
- said value (T_{cell}) of the temperature of the cells of said PVT panel (1) is higher than said second threshold value (Tₘₐₓ)
- said value (T_{S, hot}) of the temperature of the water inside said hot storage tank (5b) is higher than said fourth threshold value (T_{Setpoint});
- said value (Tₒᵤₜ) of the temperature of the water leaving said PVT panel (1) is lower than said value (T_{Sfr}) of the temperature of the water in said cold storage tank (5a); and
- said second difference (D2) is higher than said third threshold value (ΔT_{hot.}).

14. The method of producing electrical, thermal and cooling energy according to one of claims 12 or 13, further comprising the steps of:
- comparing said value (T_{cell}) of the temperature of the cells of said PVT panel (1) with said second threshold value (Tₘₐₓ)
- comparing said value (T_{S, hot}) of the temperature of the water inside said hot storage tank (5b) with said fourth threshold value (T_{Setpoint}); and
- comparing said value (Tₒᵤₜ) of the temperature of the water leaving said PVT panel (1) with said value (T_{Sfr}) of the temperature of the water inside said cold storage tank (5a),
- controlling the flow of water in said first hydraulic circuit (13) so as to hydraulically connect said PVT panel (1) to said cold storage tank (5a) and to generate a flow of water between said cold storage tank (5a) and said PVT panel (1), when:
- said value (T_{cell}) of the temperature of the cells of said PVT panel (1) is higher than said second threshold value (Tₘₐₓ)
- said value (T_{S, hot}) of the temperature of the water inside said hot storage tank (5b) is higher than said fourth threshold value (T_{Setpoint}); and
- said value (Tₒᵤₜ) of the temperature of the water leaving said PVT panel (1) is higher than said value (T_{Sfr}) of the temperature of the water inside said cold storage tank (5a).

15. The method of producing electrical, thermal and cooling energy according to one of claims 9 to 14, wherein:
said first temperature values comprise a value (T_{Sfr}) of the temperature of the water in said cold storage tank (5a);
said second temperature values comprise a value (Tₘₐᵢₙₛ) of the temperature of the running water in said second hydraulic circuit (14);
the method further comprising the steps of:
- comparing said value (Tₘₐᵢₙₛ) of the temperature of the running water with said value (T_{Sfr}) of the temperature of the water in said cold storage tank (5a);
- controlling the flow of water in said second hydraulic circuit (14) so that said second heat exchanger (4) is hydraulically connected to said hot storage tank (5b) when said value (Tₘₐᵢₙₛ) of the temperature of the running water in said second hydraulic circuit (14) is lower than said value (T_{Sfr}) of the temperature of the water in said cold storage tank (5a), and
- controlling the flow of water in said second hydraulic circuit (14) so that said second heat exchanger (4) is hydraulically disconnected from said second hydraulic circuit (14) when said value (Tₘₐᵢₙₛ) of the temperature of the running water in said second hydraulic circuit (14) is higher than said value (T_{Sfr}) of the temperature of the water in said cold storage tank (5a).

## Patentansprüche

1. System (16) zur gleichzeitigen Erzeugung von elektrischer, thermischer und Kühlenergie bestehend aus:
- ein strahlungsgekühltes PVT-Paneel (1), vorzugsweise von der unverglaster Art, zur Erzeugung von elektrischer und/oder thermischer und/oder Kühlenergie;
- einen Kältespeichertank (5a), der Wasser enthalten kann, das in dem PVT-Paneel (1) gekühlt wird; und
- einen ersten Wärmetauscher (3) zum Abführen der Wärme aus dem in dem PVT-Paneel (1) geheitzten Wasser;
die in einem ersten hydraulischen Kreislauf (13) miteinander verbunden sind; wobei das System ferner umfasst:
- erste Mittel (2a, 2b, 2c, 2f) zum Messen erster Temperaturwerte an vorgegebenen Punkten des Systems (16);
- erste Mittel (6a, 8, 9, 10) zum Steuern des Wasserflusses im ersten hydraulischen Kreislauf (13), die so konfiguriert sind, dass das PVT-Paneel (1) abwechselnd hydraulisch mit dem Kältespeichertank (5a) oder mit dem ersten Wärmetauscher (3) abhängig von den ersten gemessenen Temperaturwerten verbunden werden kann, und
- einen Wärmespeichertank (5b), der Wasser enthalten kann und einen Einlass (17a) und einen Auslass (17b) umfasst, wobei der erste Wärmetauscher (3) im Inneren des Wärmespeichertank (5b) angeordnet ist.

2. System nach Anspruch 1, ferner umfassend einen zweiten Wärmetauscher (4) innerhalb des Kältespeichertanks (5a), wobei der zweite Wärmetauscher (4) und der Wärmespeichertank (5b) in einem zweiten hydraulischen Kreislauf (14) miteinander verbunden sind.

3. System nach Anspruch 2, bei dem der zweite hydraulische Kreislauf (14) über einen Wasserzulauf (11) mit dem Wassernetz verbunden ist und der zweite Wärmetauscher (4) einen über den Anschluss (11) mit dem Wassernetz gespeisten Zulauf (7a) und einen Auslauf (7b) zur Versorgung des Wärmespeichertanks (5b) aufweist.

4. System nach Anspruch 3, ferner umfassend:
- zweite Mittel (2d, 2e) zum Messen zweiter Temperaturwerte an vorgegebenen Punkten des Systems (16), und
- zweite Mittel (6b) zum Steuern des Wasserflusses im zweiten hydraulischen Kreislauf (14), die so konfiguriert sind, dass das Wassernetz den zweiten Wärmetauscher (4) und/oder den Wärmespeichertank (5b) in Abhängigkeit von den zweiten gemessenen Temperaturwerten speisen kann.

5. System nach einem der Ansprüche 1 bis 4, bei dem die ersten Mittel (2a, 2b, 2c, 2f) zum Messen von Temperaturwerten umfassen:
- einen ersten Temperatursensor (2a), der konfiguriert ist, um die Temperatur des Wassers zu messen, das in das PVT-Paneel (1) eintritt;
- einen zweiten Temperatursensor (2b), der so konfiguriert ist, dass er die Temperatur des fließenden Wassers misst, das das PVT-Paneel (1) verlässt;
- einen dritten Temperatursensor (2c), der konfiguriert ist, um die Temperatur des Wassers in dem Kältespeichertank (5a) zu messen;
- einen vierten Temperatursensor (2f), der konfiguriert ist, um die Temperatur der Zellen im hinteren Teil des Photovoltaikmoduls des PVT-Paneels (1) zu messen.

6. System nach einem der Ansprüche 1 bis 5, wobei die ersten Mittel (6a, 8, 9, 10) zum Steuern des Wasserflusses im ersten hydraulischen Kreislauf (13) umfassen:
- ein erstes motorisiertes Dreiwege-Umschaltventil (6a), das so konfiguriert ist, dass es den Auslauf des PVT-Paneels (1) abwechselnd mit dem Kältespeichertank (5a) oder mit dem ersten Wärmetauscher (3) verbindet;
- einen Durchflussmesser (8), der so konfiguriert ist, dass er den Durchfluss von fließendem Wasser im ersten hydraulischen Kreislauf (13) misst;
- eine Pumpeneinheit (9), die so konfiguriert ist, dass sie den Wasserfluss innerhalb des ersten hydraulischen Kreislaufes (13) erzeugt;
- ein Paar Steuerventile (10), die so konfiguriert sind, dass sie Strömungsumkehrungen im Kältespeichertank (5a) oder im ersten Wärmetauscher (3) vermeiden.

7. System nach einem der Ansprüche 4 bis 6, bei dem die zweiten Mittel (2d, 2e) zum Messen von Temperaturwerten umfassen:
- einen fünften Temperatursensor (2d), der konfiguriert ist, um die Temperatur des Wassers in dem Wärmespeichertank (5b) zu messen;
- einen sechsten Temperatursensor (2e), der so konfiguriert ist, dass er die Temperatur des fließenden Wassers im zweiten hydraulischen Kreislauf (14) misst.

8. System nach einem der Ansprüche 4 bis 7, umfassend Mittel (15) zum Messen der Intensität der Sonnenstrahlung und eine Steuereinheit (12), die betriebsmäßig mit den ersten und zweiten Mitteln zum Steuern des Wasserflusses verbunden ist, mit den ersten und zweiten Mitteln zum Messen der Temperaturwerte (2a-2e), und mit Mitteln zum Messen der Intensität der Sonnenstrahlung (15), wobei die Steuereinheit (12) konfiguriert ist, um die ersten und zweiten Steuermittel als Funktion der ersten und zweiten Mittel (2a-2e) zu betreiben, um den Wasserfluss in den ersten und zweiten hydraulischen Kreislaufen (13, 14) zu steuern.

9. Verfahren zum Erzeugen von elektrischer, thermischer und Kühlenergie mittels eines Systems (16) nach einem der Ansprüche 2 bis 8, umfassend die folgenden Schritte:
- Messen von ersten Temperaturwerte an vorher festgelegten Punkten des Systems (16), und
- Steuern des Wasserflusses im ersten hydraulischen Kreislauf (13), so dass das PVT-Paneel (1) alternativ hydraulisch mit dem Kältespeichertantk (5a) oder mit dem ersten Wärmetauscher (3), in Abhängigkeit der ersten gemessenen Temperaturwerte, verbunden ist;
- Messen von zweiten Temperaturwerten an vorher festgelegten Punkten des Systems (16),
- Steuern des Wasserflusses im ersten hydraulischen Kreislauflauf (13), so dass das PVT-Paneel (1) alternativ hydraulisch mit dem Kältespeichertank (5a) oder mit dem ersten Wärmetauscher (3), in Abhängigkeit der ersten und zweiten gemessenen Temperaturwerte, verbunden ist, und
- Steuern des Wasserflusses im zweiten hydraulischen Kreislauf (14), so dass der zweite Wärmetauscher (4) abhängig von den ersten und zweiten gemessenen Temperaturwerten abwechselnd mit dem Wärmespeichertank (5b) hydraulisch verbunden ist.

10. Verfahren zur Erzeugung von elektrischer, thermischer und Kühlenergie nach Anspruch 9, bei dem:
die ersten Temperaturwerte umfassen einen Wert (Tₒᵤₜ) der Temperatur des Wassers, das das PVT-Paneel (1) verlässt,
und einen Wert (T_{Sfr}) der Temperatur des Wassers in dem Kältespeichertank (5a)); wobei das Verfahren ferner umfasst:
- Vergleich einer ersten Differenz (D1) zwischen dem Wert (Tₒᵤₜ) der Temperatur des Wassers am Ausgang des PVT-Paneels (1) und dem Wert (T_{Sfr}) der Temperatur des Wassers im Kältespeichertank (5a) und einem ersten Grenzwert (ΔTfr);
- Steuerung des Wasserflusses im ersten hydraulischen Kreislauf (13), um das PVT-Paneel (1) hydraulisch mit dem Kältespeichertank (5a) zu verbinden und einen Wasserfluss zwischen dem PVT-Paneel (1) und dem Kältespeichertank (5a) zu erzeugen, wenn die erste Differenz (D1) größer als der erste Grenzwert (Δ_{Tfr}) ist.

11. Verfahren zur Erzeugung von elektrischer, thermischer und Kühlenergie nach Anspruch 9 oder 10, bei dem:
die ersten Temperaturwerte umfassen einen Wert (Tₒᵤₜ) der Temperatur des Wassers am Ausgang des PVT-Paneels (1),
und einen Wert (T_{cell}) der Temperatur der Zellen des PVT-Panels (1);
die zweiten Temperaturwerte umfassen einen Wert (T_{S,hot}) der Temperatur des Wassers im Wärmespeichertank (5b);
wobei das Verfahren ferner umfasst:
- Vergleich zwischen dem Wert (T_{cell}) der Temperatur der Zellen des PVT-Paneels (1) und einem zweiten Grenzwert (Tₘₐₓ);
- Vergleich einer zweiten Differenz (D2) zwischen dem Wert (Tₒᵤₜ) der Temperatur des Wassers am Ausgang des PVT-Paneels (1) und einem Wert (T_{S,hot}) der Temperatur des Wassers im Wärmespeichertank (5b) und einen dritten Grenzwert (ΔTₕₒₜ), und
- Steuerung des Wasserflusses im ersten hydraulischen Kreislauf (13), um das PVT-Paneel (1) hydraulisch mit dem ersten Wärmetauscher (3) zu verbinden und einen Wasserfluss vom PVT-Paneel (1) zum ersten Wärmetauscher (3) zu erzeugen, wenn:
- der Wert (T_{cell}) der Temperatur der Zellen des PVT-Paneels (1) niedriger als der zweite Grenzwert (Tₘₐₓ) ist, und
- die zweite Differenz (D2) größer als der dritte Grenzwert (ΔTₕₒₜ) ist.

12. Verfahren zur Erzeugung von elektrischer, thermischer und Kühlenergie nach Anspruch 11, ferner umfassend die folgenden Schritte:
- Vergleich zwischen dem Wert (T_{cell}) der Temperatur der Zellen des PVT-Paneels (1) und dem zweiten Grenzwert (Tₘₐₓ);
- Vergleich zwischen dem Wert (T_{S,hot}) der Temperatur des Wassers im Wärmespeichertank (5b) und einem vierten Grenzwert (T_{Setpoint});
- Vergleich zwischen der zweiten Differenz (D2) und dem dritten Grenzwert (ΔTₕₒₜ); und
- Steuerung des Wasserflusses im ersten hydraulischen Kreislauf (13), um das PVT-Paneel (1) hydraulisch mit dem ersten Wärmetauscher (3) zu verbinden und einen Wasserfluss vom PVT-Paneel (1) zum ersten Wärmetauscher (3) zu erzeugen, wenn:
- der Wert (T_{cell}) der Temperatur der Zellen des PVT-Paneels (1) größer als der zweite Grenzwert (Tₘₐₓ) ist;
- der Wert (T_{S,hot}) der Temperatur des Wassers im Wärmespeichertank (5b) niedriger als der vierte Grenzwert (T_{Setpoint}) ist; und
- die zweite Differenz (D2) größer als der dritte Grenzwert (ΔTₕₒₜ) ist.

13. Verfahren zur Erzeugung von elektrischer, thermischer und Kühlenergie nach einem der Ansprüche 11 oder 12, bei dem:
die ersten Temperaturwerte umfassen einen Wert (T_{Sfr}) des Wassers im Kältespeichertank (5a); wobei das Verfahren ferner umfasst:
- Vergleich zwischen dem Wert (T_{cell}) der Temperatur der Zellen des PVT-Paneels (1) und dem zweiten Grenzwert (Tₘₐₓ)
- Vergleich zwischen dem Wert (T_{S,hot}) der Temperatur des Wassers im Wärmespeichertank (5b) und dem vierten Grenzwert (T_{Setpoint});
- Vergleich zwischen dem Wert (Tₒᵤₜ) der Temperatur das Wassers am Ausgang des PVT-Paneels (1) und dem Wert (T_{Sfr}) der Temperatur des Wassers im Kältespeichertank (5a);
- Vergleich zwischen der zweiten Differenz (D2) und dem dritten Grenzwert (ΔTₕₒₜ); und
- Steuerung des Wasserflusses im ersten hydraulischen Kreislauf (13), um das PVT-Paneel (1) hydraulisch mit dem ersten Wärmetauscher (3) zu verbinden und einen Wasserfluss vom PVT-Paneel (1) zum ersten Wärmetauscher (3) zu erzeugen, wenn:
- der Wert (T_{cell}) der Temperatur der Zellen des PVT-Panels (1) höher als der zweite Grenzwert (Tₘₐₓ) ist
- der Wert (T_{S,hot}) der Temperatur des Wassers im Warmspeichertank (5b) höher als der vierte Grenzwert (T_{Setpoint}) ist;
- der Wert (Tₒᵤₜ) der Temperatur des Wassers am Ausgang des PVT-Paneels (1) niedriger als der Wert (T_{Sfr}) der Temperatur des Wassers im Kältespeichertank (5a) ist; und
- die zweite Differenz (D2) größer als der dritte Grenzwert (ΔTₕₒₜ) ist.

14. Verfahren zur Erzeugung von elektrischer, thermischer und Kühlenergie nach einem der Ansprüche 12 oder 13, ferner umfassend die folgenden Schritte:
- Vergleich zwischen dem Wert (T_{cell}) der Temperatur der Zellen des PVT-Paneels (1) und dem zweiten Grenzwert (Tₘₐₓ)
- Vergleich zwischen dem Wert (T_{S,hot}) der Temperatur des Wassers im Wärmespeichertank (5b) und dem vierten Grenzwert (T_{Setpoint}); und
- Vergleich zwischen dem Wert (Tₒᵤₜ) der Temperatur des Wassers am Ausgang des PVT-Paneels (1) und dem Wert (T_{Sfr}) der Temperatur des Wassers im Kältespeichertank (5a);
- Steuerung des Wasserflusses im ersten hydraulischen Kreislauf (13), um das PVT-Paneel (1) hydraulisch mit dem Kältespeichertank (5a) zu verbinden und einen Wasserfluss zwischen dem Kältespeichertank (5a) und dem PVT-Paneel (1) zu erzeugen, wenn:
- der Wert (T_{cell}) der Temperatur der Zellen des PVT-Panels (1) höher als der zweite Grenzwert (Tₘₐₓ) ist
- der Wert (T_{S,hot}) der Temperatur des Wassers im Wärmespeichertank (5b) höher als der vierte Grenzwert (T_{Setpoint}) ist; und
- der Wert (Tₒᵤₜ) der Temperatur des Wasswrs des PVT-Paneels (1) höher als der Wert (_{TSfr}) der Temperatur des Wassers im Kältespeichertank (5a) ist.

15. Verfahren zur Erzeugung von elektrischer, thermischer und Kühlenergie nach einem der Ansprüche 9 bis 14, bei dem:
die ersten Temperaturwerte umfassen einen Wert (T_{Sfr}) der Temperatur des Wassers im Kältespeichertank (5a);
die zweiten Temperaturwerte umfassen einen Wert (Tₘₐᵢₙₛ) der Temperatur des fließenden Wassers im zweiten hydraulischen Kreislauf (14); wobei das Verfahren ferner die folgenden Schritte umfasst:
- Vergleich zwischen dem Wert (Tₘₐᵢₙₛ) der Temperatur des fließenden Wassers und dem Wert (T_{Sfr}) der Temperatur des Wassers im Kältespeichertank (5a);
- Steuerung des Wasserflusses im zweiten hydraulischen Kreislauf (14), um den zweiten Wärmetauscher (4) hydraulisch mit dem Wärmespeichertank (5b) zu verbinden, wenn der Wert (Tₘₐᵢₙₛ) der Temperatur des fließenden Wassers im zweiten hydraulischen Kreislauf (14) niedriger als der Wert (T_{Sfr}) der Temperatur des Wassers im Kältespeichertank (5a) ist; und
- Steuerung des Wasserflusses im zweiten hydraulischen Kreislauf (14), um den zweiten Wärmetauscher (4) hydraulisch vom zweiten hydraulischen Kreislauf (14) zu trennen, wenn der Wert (Tₘₐᵢₙₛ) der Temperatur des fließenden Wassers im zweiten hydraulischen Kreislauf (14) höher als der Wert (T_{Sfr}) der Temperatur des Wassers im Kältespeichertank (5a) ist.

## Revendications

1. Système (16) de production simultanée d'énergie électrique, termique et de refroidissement comprenant :
- un panneau PVT (1) à refroidissement par rayonnement, de préférence de type non vitré, pour la production d'énergie électrique et/ou thermique et/ou de refroidissement ;
- un réservoir de stockage à froid (5a) apte à contenir de l'eau refroidie dans le panneau PVT (1) ; et
- un premier échangeur de chaleur (3), pour évacuer la chaleur de l'eau traitée dans le panneau PVT (1);
reliés les uns aux autres dans un premier circuit hydraulique (13);
le système comprenant également:
- des premiers moyens (2a, 2b, 2c, 2f) pour mesurer des premières valeurs de température dans des points prédéterminés du système (16);
- des premiers moyens (6a, 8, 9, 10) de contrôle du débit d'eau dans le premier circuit hydraulique (13), configurés de manière à ce que le panneau PVT (1) puisse être alternativement relié du point de vue hydraulique au réservoir de stockage à froid (5a) ou au premier échangeur de chaleur (3), en fonction des premières valeurs de température mesurées, et
- un réservoir de stockage à chaud (5b), apte à contenir de l'eau et comprenant une entrée (17a) et une sortie (17b), le premier échangeur de chaleur (3) étant situé à l'intérieur du réservoir de stockage à chaud (5b).

2. Système selon la revendication 1, comprenant en outre un deuxième échangeur de chaleur (4) à l'intérieur du réservoir de stockage à froid (5a), le deuxième échangeur de chaleur (4) et le réservoir de stockage à chaud (5b) étant reliés l'un à l'autre dans un deuxième circuit hydraulique (14).

3. Système selon la revendication 2, dans lequel le deuxième circuit hydraulique (14) est relié au réseau d'eau par une entrée d'eau (11) et le deuxième échangeur de chaleur (4) a une entrée (7a) alimentée par la connexion (11) avec le réseau d'eau et une sortie (7b) reliée pour alimenter le réservoir de stockage à chaud (5b) .

4. Système selon la revendication 3, comprenant en outre :
- des deuxièmes moyens (2d, 2e) pour mesurer des deuxièmes valeurs de température dans des points prédéterminés du système (16), et
- des deuxièmes moyens (6b) de contrôle du débit d'eau dans le deuxième circuit hydraulique (14), configurés de manière à ce que le réseau d'eau puisse alimenter le deuxième échangeur de chaleur (4) et/ou le réservoir de stockage à chaud (5b), en fonction des deuxièmes valeurs de température mesurées.

5. Système selon l'une des revendications 1 à 4, dans lequel les premiers moyens (2a, 2b, 2c, 2f) de mesure de valeurs de température comprennent:
- un premier capteur de température (2a), configuré pour mesurer la température de l'eau entrant dans le panneau PVT (1);
- un deuxième capteur de température (2b), configuré pour mesurer la température de l'eau courante en sortie du panneau PVT (1);
- un troisième capteur de température (2c), configuré pour mesurer la température de l'eau dans le réservoir de stockage à froid (5a);
- un quatrième capteur de température (2f), configuré pour mesurer la température des cellules dans la partie arrière du module photovoltaïque du panneau PVT (1).

6. Système selon l'une des revendications 1 à 5, dans lequel les premiers moyens (6a, 8, 9, 10) de contrôle du débit d'eau dans le premier circuit hydraulique (13) comprennent:
- une première vanne de dérivation à trois voies motorisée (6a), configurée pour relier alternativement la sortie du panneau PVT (1) au réservoir de stockage à froid (5a) ou au premier échangeur de chaleur (3);
- un débitmètre (8), configuré pour mesurer le débit d'eau courante dans le premier circuit hydraulique (13);
- un'unité de pompe (9), configurée pour générer le débit d'eau à l'intérieur du premier circuit hydraulique (13);
- une paire de vannes de contrôle (10), configurées pour éviter des inversions de flux dans le réservoir de stockage à froid (5a) ou dans le premier échangeur de chaleur (3).

7. Système selon l'une des revendications 4 à 6, dans lequel les deuxièmes moyens (2d, 2e) de mesure de valeurs de température comprennent:
- un cinquième capteur de température (2d), configuré pour mesurer la température de l'eau dans le réservoir de stockage à chaud (5b);
- un sixième capteur de température (2e), configuré pour mesurer la température de l'eau courante dans le deuxième circuit hydraulique (14).

8. Système selon l'une quelconque des revendications 4 à 7, comprenant des moyens (15) de mesure de l'intensité du rayonnement solaire et une unité de contrôle (12) reliée fonctionnellement aux premiers et deuxièmes moyens de contrôle du débit d'eau, aux premiers et deuxièmes moyens de mesure des valeurs de température (2a-2e), et aux moyens de mesure de l'intensité du rayonnement solaire (15), l'unité de contrôle (12) étant configurée pour faire fonctionner les premiers et deuxièmes moyens de contrôle en fonction des premièrs et deuxièmes moyens de mesure de valeurs de température (2a-2e), pour gérer le débit d'eau dans les premiers et deuxièmes circuits hydrauliques (13, 14).

9. Procédé de production d'énergie électrique, thermique et de refroidissement, au moyen d'un système (16) selon l'une quelconque des revendications 2 à 8, comprenant les opérations suivantes:
- mesurer des premières valeurs de température dans des points préétablis du système (16), et
- contrôler le débit d'eau dans le premier circuit hydraulique (13), de manière à ce que le panneau PVT (1) soit alternativement relié hydrauliquement au réservoir de stockage à froid (5a) ou au premier échangeur de chaleur (3), en fonction des premières valeurs de température mesurées;
- mesurer des deuxièmes valeurs de température dans des points préétablis du système (16),
- contrôler le débit d'eau dans le premier circuit hydraulique (13), de manière à ce que le panneau PVT (1) soit alternativement relié hydrauliquement au réservoir de stockage à froid (5a) ou au premier échangeur de chaleur (3), en fonction des premières et deuxièmes valeurs de température mesurées, et
- contrôler le débit d'eau dans le deuxième circuit hydraulique (14), de manière à ce que le deuxième échangeur de chaleur (4) soit relié alternativement du point de vue hydraulique au réservoir de stockage à chaud (5b), en fonction des premières et deuxièmes valeurs de température mesurées.

10. Procédé de production d'énergie électrique, thermique et de refroidissement selon la revendication 9, dans lequel:
les premières valeurs de température comprennent une valeur (Tₒᵤₜ) de la température de l'eau en sortie du panneau PVT (1) et une valeur (T_{Sfr}) de la température de l'eau dans le réservoir de stockage à froid (5a);
le procédé comprenant en outre:
- comparaison d'une une première différence (D1) entre la valeur (Tₒᵤₜ) de la température de l'eau en sortie du panneau PVT (1) et la valeur (T_{Sfr}) de la température de l'eau dans le réservoir de stockage à froid (5a), et une première valeur limite (ΔT_{fr});
- contrôle du débit d'eau dans le premier circuit hydraulique (13) de manière à relier hydrauliquement le panneau PVT (1) au réservoir de stockage à froid (5a) et à générer un débit d'eau entre le panneau PVT (1) et le réservoir de stockage à froid (5a), lorsque la première différence (D1) est supérieure à la première valeur limite (ΔT_{fr}).

11. Procédé de production d'énergie électrique, thermique et de refroidissement selon la revendication 9 ou 10, dans lequel:
les premières valeurs de température comprennent une valeur (Tₒᵤₜ) de la température de l'eau en sortie du panneau PVT (1) et une valeur (Tₒᵤₜ) de la température des cellules du panneau PVT (1);
les deuxièmes valeurs de température comprennent une valeur (T_{S,hot}) de la température de l'eau dans le réservoir de stockage à chaud (5b);
le procédé comprenant en outre:
- comparaison entre la valeur (T_{cell}) de la température des cellules du panneau PVT (1) et une deuxième valeur limite (Tₘₐₓ);
- comparaison d'une deuxième différence (D2) entre la valeur (Tₒᵤₜ) de la température de l'eau en sortie du panneau PVT (1) et une valeur (T_{S,hot}) de la température de l'eau dans le réservoir de stockage à chaud (5b) et
une troisième valeur limite (ΔTₕₒₜ), et
- contrôle du débit d'eau dans le premier circuit hydraulique (13) de manière à relier hydrauliquement le panneau PVT (1) au premier échangeur de chaleur (3) et à générer un débit d'eau du panneau PVT (1) vers le premier échangeur de chaleur (3), lorsque:
- la valeur (T_{cell}) de la température des cellules du panneau PVT (1) est inférieure à la deuxième valeur limite (Tₘₐₓ), et
- la deuxième différence (D2) est supérieure à la troisième valeur limite (ΔTₕₒₜ).

12. Procédé de production d'énergie électrique, thermique et de refroidissement selon la revendication 11, comprenant en outre les opérations suivantes:
- comparaison entre la valeur (T_{cell}) de la température des cellules du panneau PVT (1) et la deuxième valeur limite (Tₘₐₓ);
- comparaison entre la valeur (T_{S,hot}) de la température de l'eau dans le réservoir de stockage à chaud (5b) et une quatrième valeur limite (T_{Setpoint});
- comparaison entre la deuxième différence (D2) et la troisième valeur limite (ΔTₕₒₜ); et
- contrôle du débit d'eau dans le premier circuit hydraulique (13) de manière à relier hydrauliquement le panneau PVT (1) au premier échangeur de chaleur (3) et à générer un débit d'eau du panneau PVT (1) vers le premier échangeur de chaleur (3), lorsque:
- la valeur (T_{cell}) de la température des cellules du panneau PVT (1) est supérieure à la deuxième valeur limite (Tₘₐₓ);
- la valeur (T_{S,hot}) de la température de l'eau dans le réservoir de stockage à chaud (5b) est inférieure à la quatrième valeur limite (T_{Setpoint}); et
- la deuxième différence (D2) est supérieure à la troisième valeur limite (ΔTₕₒₜ).

13. Procédé de production d'énergie électrique, thermique et de refroidissement selon l'une des revendications 11 ou 12, dans lequel:
les premières valeurs de température comprennent une valeur (T_{Sfr}) de l'eau dans le réservoir de stockage à froid (5a); le procédé comprenant également:
- comparaison entre la valeur (T_{cell}) de la température des cellules du panneau PVT (1) et la deuxième valeur limite (Tₘₐₓ) - comparaison entre la valeur (T_{S,hot}) de la température de l'eau dans le réservoir de stockage à chaud (5b) et la quatrième valeur limite (T_{Setpoint});
- comparaison entre la valeur (Tₒᵤₜ) de la température de l'eau en sortie du panneau PVT (1) et la valeur (T_{Sfr}) de la température de l'eau dans le réservoir de stockage à froid (5a);
- comparaison entre la deuxième différence (D2) et la troisième valeur limite (ΔTₕₒₜ); et
- contrôle du débit d'eau dans le premier circuit hydraulique (13) de manière à relier hydrauliquement le panneau PVT (1) au premier échangeur de chaleur (3) et à générer un débit d'eau du panneau PVT (1) vers le premier échangeur de chaleur (3), lorque:
- la valeur (T_{cell}) de la température des cellules du panneau PVT (1) est supérieure à la deuxième valeur limite (Tₘₐₓ)
- la valeur (T_{S,hot}) de la température de l'eau dans le réservoir de stockage à chaud (5b) è supérieure à la quatrième valeur limite (T_{Setpoint});
la valeur (Tₒᵤₜ) de la température de l'eau en sortie du panneau PVT (1) est inférieure à la valeur (T_{Sfr}) de la température de l'eau dans le réservoir de stockage à froid (5a); et
- la deuxième différence (D2) est supérieure à la troisième valeur limite (ΔTₕₒₜ).

14. Procédé de production d'énergie électrique, thermique et de refroidissement selon l'une des revendications 12 ou 13, comprenant en outre les opérations suivantes:
- comparaison entre la valeur (T_{cell}) de la température des cellules du panneau PVT (1) et la deuxième valeur limite (Tₘₐₓ)
- comparaison entre la valeur (T_{S,hot}) de la température de l'eau dans le réservoir de stockage à chaud (5b) et la quatrième valeur limite (T_{Setpoint}); et
- comparaison entre la valeur (Tₒᵤₜ) de la température de l'eau en sortie du panneau PVT (1) et la valeur (T_{Sfr}) de la température de l'eau dans le réservoir de stockage à froid (5a);
- contrôle du débit d'eau dans le premier circuit hydraulique (13) de manière à relier hydrauliquement le panneau PVT (1) au réservoir de stockage à froid (5a) et à générer un débit d'eau entre le réservoir de stockage à froid (5a) et le panneau PVT (1), lorsque:
- la valeur (T_{cell}) de la température des cellules du panneau PVT (1) est supérieure à la deuxième valeur limite (Tₘₐₓ)
- la valeur (T_{S,hot}) de la température de l'eau dans le réservoir de stockage à chaud (5b) è supérieure à la quatrième valeur limite (T_{Setpoint}); et
la valeur (Tₒᵤₜ) de la température de l'eau en sortie du panneau PVT (1) est supérieure à la valeur (T_{Sfr}) de la température de l'eau dans le réservoir de stockage à froid (5a) .

15. Procédé de production d'énergie électrique, thermique et de refroidissement selon l'une des revendications 9 à 14, dans lequel:
les premières valeurs de température comprennent une valeur (T_{Sfr}) de la température l'eau dans le réservoir de stockage à froid (5a);
les deuxièmes valeurs de température comprennent une valeur (Tₘₐᵢₙₛ) de la température de l'eau courante dans le deuxième circuit hydralique (14);
le procédé comprenant en outre les opérations suivantes :
- comparaison entre la valeur (Tₘₐᵢₙₛ) de la température de l'eau courante et la valeur (T_{Sfr}) de la température de l'eau dans le réservoir de stockage à froid (5a);
- contrôle du débit d'eau dans le deuxième circuit hydraulique (14) de manière à relier hydrauliquement le deuxième échangeur de chaleur (4) au réservoir de stockage à chaud (5b), lorsque la valeur (Tₘₐᵢₙₛ) de la température de l'eau courante dans le deuxième circuit hydraulique (14) est inférieure à la valeur (T_{Sfr}) de la température de l'eau dans le réservoir de stockage à froid (5a); et
- contrôle du débit d'eau dans le deuxième circuit hydraulique (14) de manière à déconnecter hydrauliquement le deuxième échangeur de chaleur (4) du deuxième circuit hydraulique (14), lorsque la valeur (Tₘₐᵢₙₛ) de la température de l'eau courante dans le deuxième circuit hydraulique (14) est supérieure à la valeur (T_{Sfr}) de la température de l'eau dans le réservoir de stockage à froid (5a).
